# FASCICULE DE BREVET EUROPEEN

(11) **EP 1 447 268 B1**
(45) Date de publication et mention de la délivrance du brevet: **08.04.2009**
(21) Numéro de dépôt: 04290357.5
(22) Date de dépôt: 11.02.2004
(51) Int. Cl.: B60P 3/22

(54) **Dispositif de rangement pour tuyau flexible de citerne et citerne équipée dudit dispositif**
Vorrichtung zur Aufbewahrung eines Schlauches und Behälter mit einer solchen Vorrichtung
Device for storing a hose and tank container with such a device

(30) Priorité: 12.02.2003 FR 0301680
(43) Date de publication de la demande: 18.08.2004
(73) Titulaire: ETABLISSEMENTS MAGYAR S.A., 21004 Dijon Cedex (FR)
(72) Inventeur: Magyar, Georges, 21004 Dijon Cedex (FR)
(74) Mandataire: Breese, Pierre

(56) Documents cités:
- DE-U- 29 911 592
- FR-A- 2 592 286
- US-A- 1 351 253
- US-A- 1 978 457
- US-A- 2 087 247
- US-A- 4 135 596
- US-A- 5 647 084

## Description

La présente invention se rapporte au domaine de la fabrication des citernes et notamment des citernes pour le transport de liquides, comme par exemple, des liquides alimentaires.

La présente invention se rapporte plus particulièrement à un dispositif de rangement d'un tuyau flexible associé à une citerne, et notamment une citerne de camion, semi-remorque ou remorque, une extrémité dudit tuyau étant reliée à ladite citerne.

L'art antérieur connaît déjà des dispositifs de rangement du tuyau flexible associé à la citerne, dont une extrémité est reliée à ladite citerne.

L'art antérieur connaît notamment un dispositif de rangement constitué d'un support circulaire présentant un moyeu relié à la citerne.

Pour le rangement du tuyau flexible, le tuyau est enroulé autour du moyeu.

Ce dispositif est situé à l'arrière de la citerne.

Un inconvénient majeur de cette solution est que le tuyau n'est pas à l'abri de dégradation que l'on pourrait lui faire subir, soit pour l'endommager lui-même, soit pour endommager les produits qui transitent à l'intérieur. Ce problème est particulièrement important lorsque la citerne est utilisée pour transporter des denrées alimentaires. En effet, rien n'empêche une personne mal intentionnée d'introduire un poison dans le tuyau, par exemple à l'aide d'une seringue.

Un autre inconvénient important de cette solution est que le dispositif de rangement prend beaucoup de place.

Un autre inconvénient important de cette solution est qu'il n'est pas aisé de rétracter le tuyau sur son support circulaire.

La présente invention entend remédier aux inconvénients de l'art antérieur en proposant un dispositif qui d'une part mette tout le tuyau à l'abri d'un quelconque endommagement en dehors des phases où il est utilisé pour remplir la citerne ou éventuellement la vider et d'autre part facilite le rangement du tuyau après utilisation.

Le document DE-29 911 592 décrit un dispositif de rangement comprenant un boîtier formant un conduit, le boîtier étant associé à la citerne le long de celle-ci.

La présente invention est du type décrit ci-dessus et elle est remarquable, dans son acception la plus large, en ce que le dispositif est constitué d'un conduit longitudinal disposé le long de ladite citerne, ledit conduit étant refermé afin d'empêcher l'accès audit tuyau lorsqu'il est rangé dans ledit conduit, la paroi supérieure dudit dispositif est formée par la paroi extérieure de la citerne.

Le dispositif selon l'invention étant un dispositif de rangement d'un tuyau flexible associé à une citerne, et notamment une citerne de camion, dans la description qui va suivre, les termes « avant » et « arrière » sont bien sûr à considérer par rapport au sens d'avancé habituel de la citerne lorsqu'elle est tirée par un véhicule tracteur.

Le dispositif de rangement selon l'invention comporte, de préférence, un bâti constitué d'un fond longitudinal, de parois latérales, éventuellement une paroi supérieure longitudinale, ainsi que des parois transversales respectivement avant et arrière.

Dans une version préférée, ladite paroi transversale arrière est, de préférence, formée par une trappe d'un caisson arrière disposé à l'arrière de ladite citerne.

Dans cette version préférée, au moins une paroi latérale est, de préférence, munie d'au moins une trappe latérale.

Ladite ou lesdites trappe(s) latérale(s) et/ou ladite trappe est ou sont, de préférence, munie(s) d'un moyen de blocage pour une fermeture sécurisée des trappes.

Le moyen de blocage de ladite ou desdites trappe(s) latérale(s) est constitué, par exemple, au moins par une tige présentant des crochets de blocage, pour le blocage des trappes, ladite tige étant mobile en rotation entre une position de fermeture dans laquelle lesdits crochets empêchent l'ouverture des trappes et une position d'ouverture dans laquelle lesdits crochets autorisent l'ouverture des trappes.

Dans une version préférée, le dispositif de rangement selon l'invention comporte un système de retrait piloté d'une extrémité dudit tuyau.

Ce système de retrait piloté comporte, de préférence, un galet d'entraînement mis en contact avec l'extrémité supérieure de la surface extérieure du tuyau par l'intermédiaire d'un dispositif d'amené.

Ce dispositif d'amené est, de préférence, constitué d'au moins un vérin, et de préférence de deux vérins disposés de part et d'autre de l'axe du tuyau dans ledit système de retrait piloté, et d'un galet presseur monté en libre rotation.

Le dispositif de rangement selon l'invention comporte, de préférence, une brosse cylindrique présentant un diamètre intérieur de brossage inférieur au diamètre extérieur dudit tuyau.

Le dispositif de rangement selon l'invention comporte en outre, de préférence, un système de lavage constitué d'au moins une rampe de distribution s'étendant à l'intérieur dudit conduit et d'une pluralité d'orifices de lavage.

La présente invention se rapporte également à une citerne, et notamment citerne de camion, de semi-remorque ou de remorque, comportant un dispositif selon l'invention et présentant un conduit longitudinal disposé le long de ladite citerne, ledit conduit étant refermé afin d'empêcher l'accès audit tuyau lorsqu'il est rangé dans ledit conduit.

Dans une version préférée, ledit conduit est disposé sur un côté de cette citerne.

Avantageusement, la présente invention permet ainsi de protéger le tuyau contre toute action extérieure pendant les phases où il n'est pas utilisé, tout en facilitant les opérations d'extraction pour utilisation et de rangement après utilisation.

Avantageusement, la présente invention n'engendre pas de perte de place utile ; en outre, elle peut être installée sur une citerne déjà existante.

On comprendra mieux l'invention à l'aide de la description, faite ci-après à titre purement explicatif, d'un mode de réalisation de l'invention, en référence aux figures annexées :
- la figure 1 illustre une vue arrière d'une citerne équipée d'un dispositif de rangement selon l'invention ;
- la figure 2 illustre une vue de détail en coupe transversale partielle du conduit du dispositif de rangement selon l'invention ;
- la figure 3 illustre une vue de côté d'une citerne équipée d'un dispositif de rangement selon l'invention ;
- la figure 4 illustre une vue de détail de dessus du côté d'une citerne équipée d'un dispositif de rangement selon l'invention, le tuyau étant en position complètement rangé ;
- la figure 5 illustre une vue de détail de dessus du côté d'une citerne équipée d'un dispositif de rangement selon l'invention, le tuyau étant en position complètement extrait ;
- la figure 6 illustre une vue de détail de dessus de l'arrière d'une citerne équipée d'un dispositif de rangement selon l'invention, le tuyau étant en position complètement rangé ;
- la figure 7 illustre une vue du face du système de retrait piloté ; et
- la figure 8 illustre une vue de côté du système de retrait piloté.

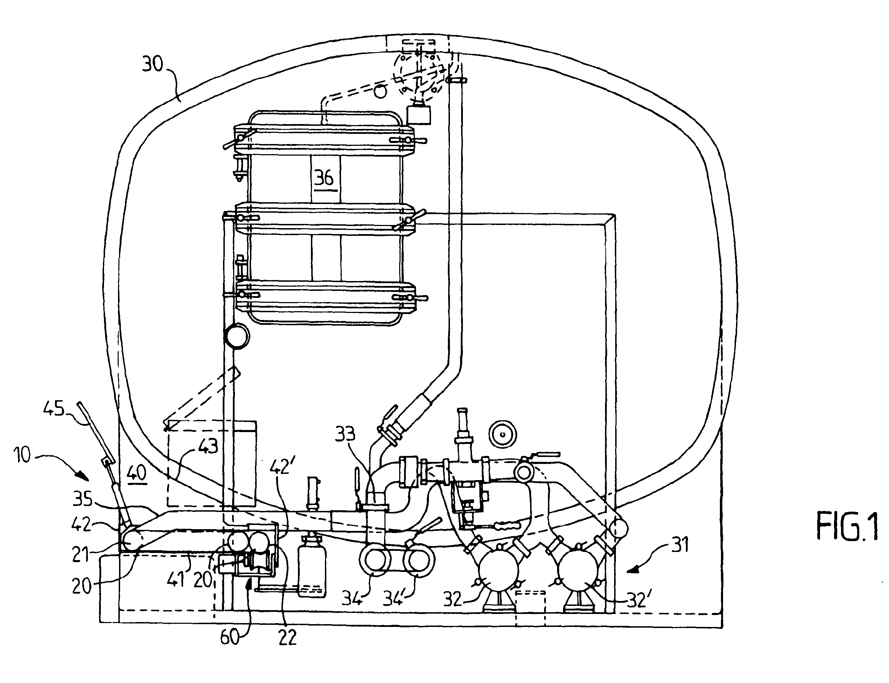

Le dispositif selon l'invention, illustré figure 1 à 6, est un dispositif (10) de rangement d'un tuyau (20) flexible associé à une citerne (30) par exemple quadrangulaire, et notamment une citerne de camion, semi-remorque ou remorque, ladite citerne étant montée sur un châssis muni d'au moins un essieu.

La citerne (30) illustrée présente une section circulaire aplatie à ses extrémités supérieure et inférieure, c'est-à-dire quadrangulaire. Elle est munie d'un système d'aspiration/refoulement (31), destiné à permettre de la remplir. Cette citerne présente une contenance de l'ordre de 25 000 litres, une longueur hors tout d'environ 8 mètres et une largeur hors tout d'environ 2, 5 mètres. Un extrémité du tuyau (20) est raccordée à ce système d'aspiration/refoulement (31).

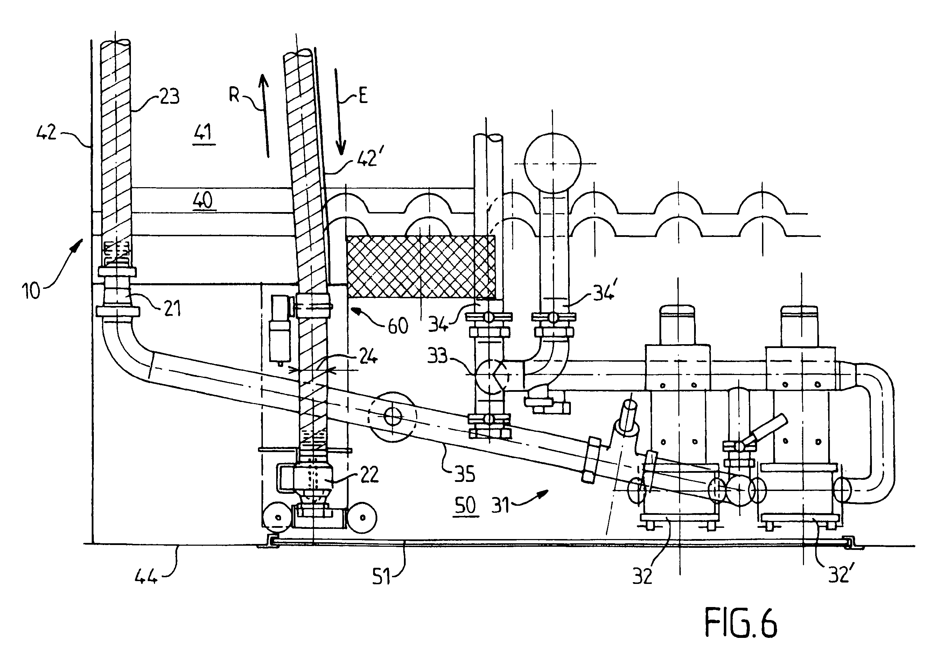

Le système d'aspiration/refoulement (31), visible sur les figures 1 et 6, comporte deux pompes (32, 32'), une vanne (33) et deux tuyaux de refoulement (34, 34') débouchant à l'intérieur de la citerne (30), l'un à l'avant, au-dessus de la plage de raccordement de la citerne à un véhicule tracteur, et l'autre à l'arrière du premier, une cloison étant, d'une manière connue, disposée à l'intérieure de la citerne, afin de permettre à l'utilisateur de remplir d'abord l'extrémité avant de la citerne et obtenir ainsi une meilleure adhérence et une meilleure tenue de route du véhicule tracteur.

Le tuyau flexible (20) est réalisé en matière synthétique. Il présente différentes couches de matière plastique.

Il présente une surface extérieure (23) résistante, un diamètre extérieur (24) d'environ 75 mm et un axe (25). Sa longueur est d'environ 14 mètres.

Une extrémité (21) dudit tuyau flexible (20) est reliée à ladite citerne (30) par l'intermédiaire du système d'aspiration/refoulement (31). Un tuyau rigide (35) relie l'extrémité (21) immobile du tuyau flexible (20) au système d'aspiration/refoulement (31).

L'autre extrémité (22) du tuyau (20), l'extrémité mobile, présente d'une manière connue, une vanne de raccordement permettant de brancher cette extrémité sur un système de vidange complémentaire présent sur le réservoir dont on entend transférer une partie du contenu, au moins, dans la citerne (30).

Le dispositif (10) de rangement selon l'invention est constitué d'un conduit (40) longitudinal disposé le long de ladite citerne (30), ledit conduit (40) étant refermé afin d'empêcher l'accès audit tuyau lorsqu'il est rangé. Le conduit (40) forme ainsi une goulotte longitudinale de rangement.

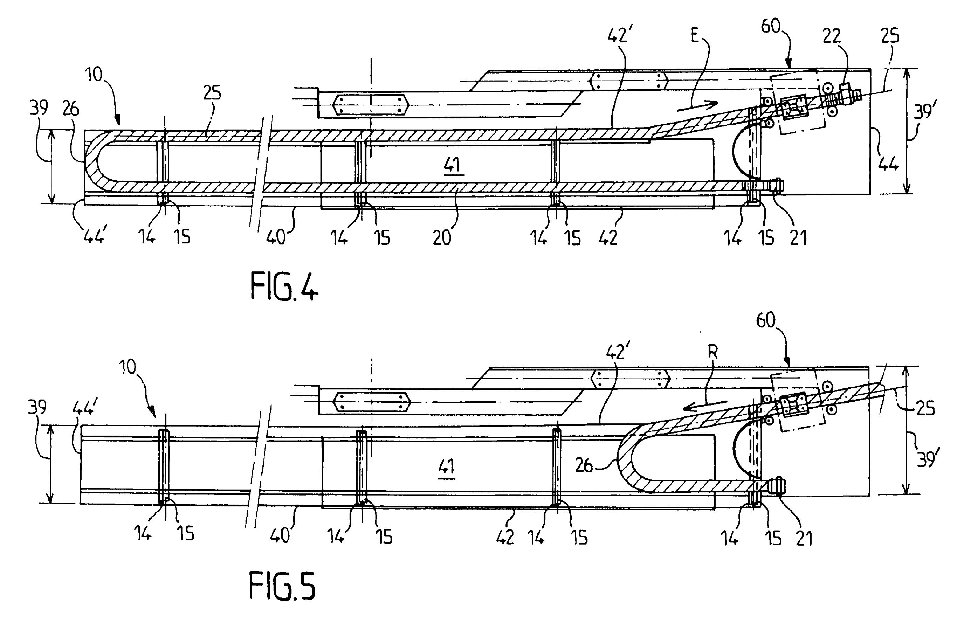

Ainsi, le tuyau (20) est plié à l'intérieur du conduit (40) en position de rangement. Toutefois, pour faciliter l'extraction du tuyau (30) afin de brancher l'extrémité (22) sur le réservoir, le tuyau (30) n'est plié qu'une seule fois à l'intérieur du conduit (40), à son extrémité avant (26), comme visible sur la figure 4, lorsqu'il est en position complètement rangé dans le conduit (40) et sur la figure 5 lorsqu'il est en position complètement extrait du conduit (40).

Pour faciliter la préhension du tuyau, l'extrémité immobile (21) est située vers l'extérieur par rapport à l'axe longitudinal de la citerne (ici à gauche) et l'extrémité mobile (22) est située vers le centre de la citerne.

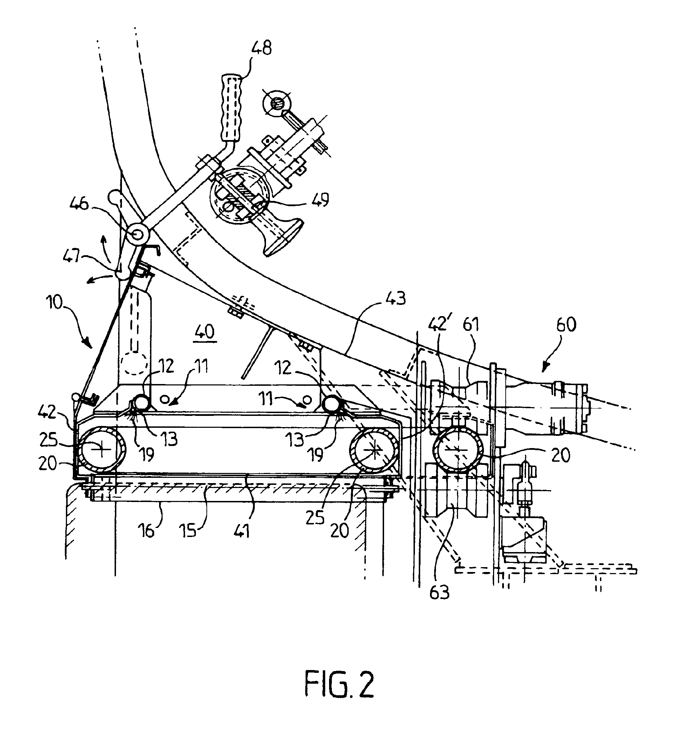

Ce dispositif (10) de rangement comporte un bâti de protection constitué d'un fond (41) longitudinal, de parois latérales (42, 42'), une paroi supérieure (43) longitudinale, ainsi que des parois transversales (44, 44') respectivement avant et arrière. Dans la version illustrée, la paroi supérieure (43) est formée par la paroi extérieure de la citerne (30), comme on peut le voir sur la figure 2. Toutes les parois sont, de préférence, réalisées en acier inoxydable.

Le conduit (40) peut présenter, par exemple en coupe transversale, une forme rectangulaire. Il est possible d'imaginer que le conduit (40) ne comporte pas de paroi supérieure (43) et présente en coupe transversale, une forme triangulaire.

La longueur totale (38) du conduit refermé (40) est de l'ordre de 7 mètres, sa largeur à l'avant (39) est de l'ordre de 50 centimètres et sa largeur à l'arrière (39') est de l'ordre de 65 centimètres.

Dans une version préférée, la citerne (30) comporte à son extrémité arrière un caisson arrière (50) dans lequel est disposé le système d'aspiration/refoulement (31). L'extrémité fixe (21) du tuyau et l'extrémité mobile (22) du tuyau lorsqu'il est complètement rangé sont également disposées dans ce caisson (50).

C'est également par ce caisson (50) que l'on peut accéder, au besoin, à l'intérieur de la citerne, par exemple pour effectuer une inspection des parois intérieures, en se glissant par le trou d'homme (36).

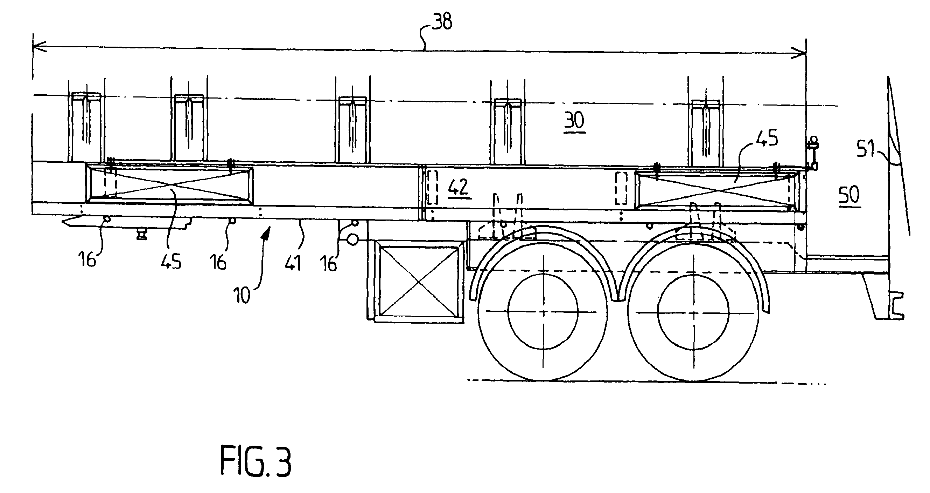

Ce caisson (50), visible sur les figures 3 et 6, est refermé à l'aide d'une trappe (51) montée sur vérins. Cette trappe (51) est munie d'un moyen de blocage, par exemple du type verrou, afin d'empêcher l'accès à l'intérieur du caisson (50) à toute personne non autorisée.

Ladite paroi transversale (44') arrière est alors formée par ladite trappe (51) du caisson (50).

Une fois la trappe (51) refermée, il n'est donc pas possible d'accéder au tuyau (20), ni au système d'aspiration/refoulement (31).

La paroi latérale gauche (42) est munie d'au moins une trappe latérale (45) et de préférence de deux trappes (45), positionnées aux extrémités avant et arrière du conduit (40).

Ces trappes latérales (45) sont munies d'un moyen de blocage constitué, de préférence, par une tige (46) présentant des crochets de blocage (47), pour le blocage des trappes (45) et à son extrémité une poignée (48), ladite tige (46) étant mobile en rotation, par actionnement de la poignée (48) entre une position de fermeture dans laquelle lesdits crochets (47) empêchent l'ouverture des trappes (45) et une position d'ouverture dans laquelle lesdits crochets (47) autorisent l'ouverture des trappes (45). Les crochets (47) forment ainsi des loqueteaux type « quart de tour ».

La poignée (48) est de préférence située à l'intérieur du caisson (50), comme illustré figure 2.

Une vis de blocage (49) permet de fixer la tige (46) dans une position par vissage de la vis de blocage contre la tige.

Il est possible de prévoir un système de blocage automatique de la vis de blocage (49) afin de pouvoir autoriser l'actionnement de cette vis d'un endroit déporté, comme par exemple de la cabine du camion.

Les trappes (45) avant et arrière permettent de procéder au changement de tuyau lorsque cela est nécessaire, et de procéder aux inspections usuelles de l'état du conduit (40).

Le dispositif (10) de rangement selon l'invention comporte en outre un système de lavage (11), visible sur la figure 2, constitue d'au moins une rampe de distribution (12), et de préférence de deux rampes de distribution (12), s'étendant à l'intérieur dudit conduit (40), chacune au-dessus d'une portion de tuyau, et d'une pluralité d'orifices de lavage (13), afin de permettre de projeter un liquide de nettoyage (19) sur le tuyau (20) lorsqu'il est rangé dans le conduit (40).

Pour l'évacuation du liquide de lavage du conduit (40) après le lavage, des fentes (14) transversales sont ménagées à intervalle régulier dans le fond (41). Un rouleau (15) présentant un diamètre légèrement supérieur à la largeur de la fente (14) est positionné à la sortie de chaque fente, de manière à ce que son axe soit sensiblement parallèle à l'axe de la fente, mais décalé vers le bas, afin de permettre au liquide de lavage de s'écouler de chaque côté (avant/arrière) du rouleau. Ce rouleau est en outre entouré par un carter de protection (16) soudé sous le fond (41) et percé de trous.

Dans la version illustrée, le conduit (40) est disposé sur le côté gauche de la citerne, mais il peut également être disposé sur le côté droit, voir sous la citerne.

Le dispositif (10) de rangement selon l'invention comporte un système de retrait piloté (60) de l'extrémité libre (22) du tuyau (20) dans le conduit (40).

Ce système peut également être utilisé pour l'extraction de l'extrémité libre (22) du conduit (40), mais cette action est en réalité facile à opérer en tirant simplement sur l'extrémité (22), grâce à la flexibilité du tuyau.

Sur les figures 4, 5 et 6, la flèche R illustre le sens du rangement ou retrait du tuyau dans le conduit (40) et la flèche E illustre le sens de l'extraction du tuyau du conduit (40).

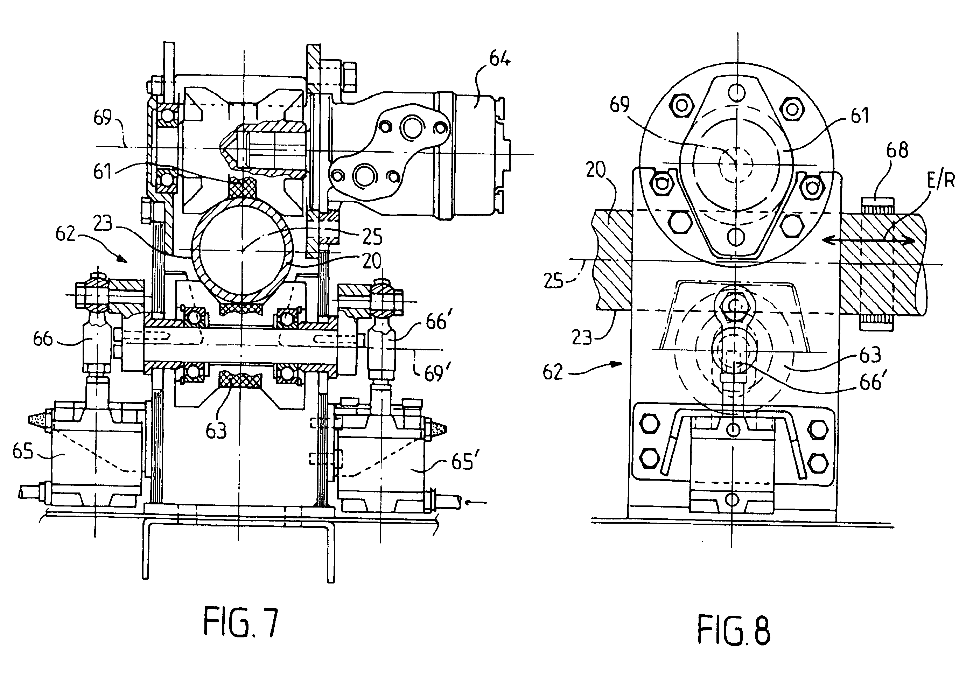

Ce système de retrait piloté (60) illustré figures 7 et 8 comporte un galet d'entraînement (61) mis en contact avec l'extrémité supérieure de la surface extérieure (23) du tuyau (20) par l'intermédiaire d'un dispositif d'amené (62) comportant un galet presseur (63) monté en libre rotation.

Le galet d'entraînement (61) est entraîné en rotation par l'intermédiaire d'un moteur (64) électrique, hydraulique ou pneumatique. La vitesse de rotation du moteur est de l'ordre de 228 tours par minute et la vitesse de défilement du tuyau dans le système de retrait piloté (60) est de l'ordre de 50 mètres par minute.

Le dispositif d'amené (62) est constitué de deux vérins (65, 65') disposés de part et d'autre de l'axe (25) du tuyau (20) dans ledit système de retrait piloté (60). Ces vérins permettent de pousser efficacement le galet presseur (63) contre le tuyau (20), par l'intermédiaire de tenons à rotule (66, 66') et ainsi de pousser le tuyau (20) contre le galet d'entraînement (61).

Les galets (61, 63) sont disposés de manière à ce que leurs axes de rotation respectifs (69, 69') soient alignés verticalement et soient sensiblement perpendiculaires à l'axe (25) du tuyau (20) dans le système de retrait piloté (60).

Pour améliorer le contact entre les galets et le tuyau, les galets sont munis, sur leur périphérie centrale, d'un moletage et de dents.

Le système de retrait piloté (60) comporte une brosse cylindrique (67), visible figure 8, présentant un diamètre intérieur de brossage inférieur au diamètre extérieur (24) dudit tuyau (20), afin de permettre de retirer la majeure partie des salissures qui ont pu adhérer au tuyau (20) lors du retour du tuyau vers le dispositif de rangement.

Du fait que le dispositif d'amené (62) comporte deux vérins (65, 65') disposés de part et d'autre de l'axe (25) du tuyau (20), le fonctionnement du dispositif d'amené (62) n'est pas perturbé par l'évacuation des salissures par la brosse (68).

Lorsque le tuyau (20) est rangé dans le conduit (40) il est plié à son extrémité avant (26) et de par sa flexibilité, les deux portions gauche/droite du tuyau arrivent en contact, de chaque côté respectivement, avec la paroi gauche (42) et la paroi droite (42').

Pour faire sortir le tuyau (20) du conduit (40), il suffit de tirer sur l'extrémité libre (22). Le tuyau (20) glisse alors sur le fond (41) du conduit (40).

Pour faire rentrer le tuyau (20) à l'intérieur du conduit (40), il suffit de mettre en oeuvre le système de retrait piloté (60) qui va appuyer sur la paroi du tuyau en tournant afin qu'il se rétracte dans le conduit (40) en glissant à nouveau sur le fond (41). Environ 15 secondes sont nécessaires pour réaliser cette opération.

Une fois complètement revenu dans le conduit (40), le tuyau peut être lavé en branchant le système de lavage (11) sur un circuit de distribution de produit de lavage.

Dans cette position rétractée, le tuyau (20) est à l'abri de tout élément extérieur.

L'invention est décrite dans ce qui précède à titre d'exemple. Il est entendu que l'homme du métier est à même de réaliser différentes variantes de l'invention sans pour autant sortir du cadre du brevet.

## Revendications

1. Dispositif (10) de rangement d'un tuyau (20) flexible associé à une citerne (30), et notamment une citerne de camion, semi-remorque ou remorque, une extrémité (21) dudit tuyau (20) étant reliée à ladite citerne (30), le dispositif étant constitué d'un conduit (40) longitudinal disposé le long de ladite citerne (30), ledit conduit (40) étant refermé afin d'empêcher l'accès audit tuyau lorsqu'il est rangé dans ledit conduit (40) le dispositif étant **caractérisé en ce que** le paroi supérieure dudit dispositif est formée pa la paroi extérieure de la citerne

2. Dispositif (10) de rangement selon la revendication 1, **caractérisé en ce qu'**il comporte un bâti constitué d'un fond (41) longitudinal, de parois latérales (42, 42'), éventuellement une paroi supérieure (43) longitudinale, ainsi que des parois transversales (44, 44') respectivement avant et arrière.

3. Dispositif (10) de rangement selon la revendication 2, **caractérisé en ce que** ladite paroi transversale (44') arrière est formée par une trappe (51) d'un caisson arrière (50) disposé à l'arrière de ladite citerne (30).

4. Dispositif (10) de rangement selon la revendication 2 ou la revendication 3, **caractérisé en ce qu'**au moins une paroi latérale (42, 42') est munie d'au moins une trappe latérale (45).

5. Dispositif (10) de rangement selon la revendication 3 ou la revendication 4, **caractérisé en ce que** ladite ou lesdites trappe(s) latérale(s) (15) et/ou ladite trappe (51) est ou sont munie(s) d'un moyen de blocage.

6. Dispositif (10) de rangement selon la revendication 5, **caractérisé en ce que** le moyen de blocage de ladite ou desdites trappe(s) latérale(s) (15) est constitué au moins par une tige (46) présentant des crochets de blocage (47), pour le blocage des trappes (45), ladite tige (46) étant mobile en rotation entre une position de fermeture dans laquelle lesdits crochets (47) empêchent l'ouverture des trappes (45) et une position d'ouverture dans laquelle lesdits crochets (47) autorisent l'ouverture des trappes (45).

7. Dispositif (10) de rangement selon l'une quelconque des revendications 1 à 6, **caractérisé en ce qu'**il comporte un système de retrait piloté (60) d'une extrémité (22) dudit tuyau (20).

8. Dispositif (10) de rangement selon la revendication 7, **caractérisé en ce que** ledit système de retrait piloté (60) comporte un galet d'entraînement (61) mis en contact avec l'extrémité supérieure de la surface extérieure (23) du tuyau (20) par l'intermédiaire d'un dispositif d'amené (62).

9. Dispositif (10) de rangement selon la revendication 8, **caractérisé en ce que** ledit dispositif d'amené (62) est constitué d'au moins un vérin, et de préférence de deux vérins (65, 65') disposés de part et d'autre de l'axe (25) du tuyau (20) dans ledit système de retrait piloté (60), et d'un galet presseur (63) monté en libre rotation.

10. Dispositif (10) de rangement selon l'une quelconque des revendications 1 à 9, **caractérisé en ce qu'**il comporte une brosse cylindrique (68) présentant un diamètre intérieur de brossage inférieur au diamètre extérieur (24) dudit tuyau (20).

11. Dispositif (10) de rangement selon l'une quelconque des revendications 1 à 10, **caractérisé en ce qu'**il comporte un système de lavage (11) constitué d'au moins une rampe de distribution (12) s'étendant à l'intérieur dudit conduit (40) et d'une pluralité d'orifices de lavage (13).

12. Citerne (30), et notamment citerne de camion, semi-remorque ou remorque, comportant un dispositif (1) selon l'une quelconque des revendications 1 à 11, et présentant un conduit (40) longitudinal disposé le long de ladite citerne (30), ledit conduit (40) étant refermé afin d'empêcher l'accès audit tuyau (20) lorsqu'il est rangé dans ledit conduit (40), la citerne étant **caractérisé en ce que** la paroi supérieure dudit dispositif (1) est formée par la paroi extérieure de la citerne.

13. Citerne (30) selon la revendication 12, **caractérisée en ce que** ledit conduit (40) est disposé sur un côté.

## Claims

1. A device (10) for storing a hose (20) associated with a tank container (30) and more particularly a tank container on a truck, a semi-trailer or a trailer, one end (21) of said hose (20) being connected to said tank container (30), with the device being composed of a longitudinal duct (40) positioned along said tank container (30), said duct (40) being closed so as to prohibit access to said hose when it is stored in said duct (40), the device being **characterized in that** the upper wall of said device is formed by the outer wall of the tank container (30).

2. A storing device (10) according to claim 1, **characterized in that** it includes a frame composed of a longitudinal bottom (41), side walls (42, 42'), if need be an upper longitudinal wall (43) as well as transversal, respectively front and back, walls (44, 44').

3. A storing device (10) according to claim 2, **characterized in that** said back transversal wall (44') is formed by a flap door (51) of a back box-type structure (50) positioned at the back of said tank container (30).

4. A storing device (10) according to claim 2 or claim 3, **characterized in that** at least a side wall (42, 42') is provided with at least one side flap door (45).

5. A storing device (10) according to claim 3 or claim 4, **characterized in that** said side flap door(s) (15) and/or said flap door (51) is/are provided with locking means.

6. A storing device (10) according to claim 5, **characterized in that** the means for locking said side flap door(s) (15) is composed of at least one rod (46) having locking hooks (47) for locking flap doors (45), said rod (46) being movable in rotation between a closed position wherein said hooks (47) prevent the opening of the flap doors (45) and an open position wherein said hooks (47) allow the opening of the flap doors (45).

7. A storing device (10) according to any one of claims 1 to 6, **characterized in that** it includes a servo-assisted system (60) for retracting one end (22) of said hose (20).

8. A storing device (10) according to claim 7, **characterized in that** said servo-assisted retraction system (60) includes a driving roller (61) placed in contact with the upper end of the outer surface (23) of the hose (20), through an approach device (62).

9. A storing device (10) according to claim 8, **characterized in that** said approach device (62) is composed of at least one jack, and preferably two jacks (65, 65') positioned on either side of the axis (25) of the hose (20) in said servo-assisted retraction system (60), and a pressure roller (63) mounted to rotate freely.

10. A storing device (10) according to any one of claims 1 to 9, **characterized in that** it includes a cylindrical brush (68) having an inner diameter of the brush smaller than the outer diameter (24) of said hose (20).

11. A storing device (10) according to any one of claims 1 to 10, **characterized in that** it includes a washing system (11) composed of at least one manifold (12) extending inside said duct (40) and a plurality of washing holes (13).

12. A tank container (30) and more particularly a tank container on a truck, a semi-trailer or a trailer, including a device (1) according to any one of claims 1 to 11, and having a longitudinal duct (40) positioned along said tank container (30), said duct (40) being closed so as to prohibit access to said hose when it is stored in said duct (40), the tank container being **characterized in that** the upper wall of said device (&) is formed by the outer wall of the tank container (30).

13. A tank container (30) according to claim 12, **characterized in that** said duct (40) is positioned on one side.

## Patentansprüche

1. Vorrichtung (10) zum Verstauen einer flexiblen Röhre (20), die einem Tank (30) und insbesondere einem Lastwagen-, Sattelauflieger- oder Anhängertank zugeordnet ist, wobei ein Ende (21) der genannten Röhre (20) mit dem genannten Tank (30) verbunden ist, wobei die Vorrichtung aus einer länglichen, entlang dem genannten Tank (30) angeordneten Leitung (40) gebildet wird, wobei die genannte Leitung (40) geschlossen ist, um den Zugang zu der genannten Röhre zu verhindern, wenn sie in der genannten Leitung (40) verstaut ist, wobei die Vorrichtung **dadurch gekennzeichnet ist, dass** die obere Wand der genannten Vorrichtung durch die äußere Wand des Tanks gebildet wird.

2. Vorrichtung (10) zum Verstauen gemäß Anspruch 1, **dadurch gekennzeichnet, dass** sie ein Tragelement umfasst, das aus einem länglichen Boden (41), lateralen Wänden (42, 42'), eventuell einer oberen länglichen Wand (43) sowie aus transversalen Wänden (44, 44') jeweils vorne und hinten gebildet wird.

3. Vorrichtung (10) zum Verstauen gemäß Anspruch 2, **dadurch gekennzeichnet, dass** die genannte transversale hintere Wand (44') durch eine Klappe (51) eines hinteren Kastens (50) gebildet wird, der an der Hinterseite des genannten Tanks (30) angeordnet ist.

4. Vorrichtung (10) zum Verstauen gemäß Anspruch 2 oder Anspruch 3, **dadurch gekennzeichnet, dass** wenigstens eine laterale Wand (42, 42') mit wenigstens einer lateralen Klappe (45) versehen ist.

5. Vorrichtung (10) zum Verstauen gemäß Anspruch 3 oder Anspruch 4**, dadurch gekennzeichnet, dass** die genannte laterale Klappe (15) oder die genannten lateralen Klappen und / oder die genannte Klappe (51) mit einem Blockiermittel versehen ist oder sind.

6. Vorrichtung (10) zum Verstauen gemäß Anspruch 5, **dadurch gekennzeichnet, dass** das Blockiermittel der genannten lateralen Klappe (15) oder der genannten lateralen Klappen aus wenigstens einem Stift (46) gebildet wird, der Blockierhaken (47) zum Blockieren der Klappen (45) aufweist, wobei der genannte Stift (46) zwischen einer Verschlussposition, in der die genannten Haken (47) das Öffnen der Klappen (45) verhindern, und einer Öffnungsposition, in der die genannten Haken (47) das Öffnen der Klappen (45) zulassen, in Rotation mobil ist.

7. Vorrichtung (10) zum Verstauen gemäß Anspruch 1 bis 6, **dadurch gekennzeichnet, dass** sie ein gesteuertes Einzugssystem (60) eines Endes (22) der genannten Röhre (20) umfasst.

8. Vorrichtung (10) zum Verstauen gemäß Anspruch 7, **dadurch gekennzeichnet, dass** das genannte gesteuerte System zum Verstauen (60) eine Antriebsrolle (61) umfasst, die mit dem oberen Ende der äußeren Fläche (23) der Röhre (20) über eine Zuführvorrichtung (62) in Kontakt gebracht wird.

9. Vorrichtung (10) zum Verstauen gemäß Anspruch 8, **dadurch gekennzeichnet, dass** die genannte Zuführvorrichtung (62) aus wenigstens einem Zylinder gebildet wird und bevorzugt aus zwei Zylindern (65, 65'), die auf jeder Seite der Achse (25) der Röhre (20) in dem genannten gesteuerten System zum Verstauen (60) angeordnet sind, und aus einer in freier Rotation angebrachten Druckrolle (63).

10. Vorrichtung (10) zum Verstauen gemäß Anspruch 1 bis 9, **dadurch gekennzeichnet, dass** sie eine zylindrische Bürste (68) umfasst, die einen kleineren inneren Bürstendurchmesser aufweist als den Außendurchmesser (24) der genannten Röhre (20).

11. Vorrichtung (10) zum Verstauen gemäß Anspruch 1 bis 10, **dadurch gekennzeichnet, dass** sie ein Waschsystem (11) umfasst, das aus wenigstens einer Verteilerrampe (12) gebildet wird, die sich im Innern der genannten Leitung (40) erstreckt, und einer Vielzahl von Waschöffnungen (13).

12. Tank (30) und insbesondere Lastwagen-, Sattelauflieger- oder Anhängertank, der eine Vorrichtung (1) gemäß Anspruch 1 bis 11 umfasst und eine längliche Leitung (40) aufweist, die entlang dem genannten Tank (30) angeordnet ist, wobei die genannte Leitung (40) verschlossen ist, um den Zugang zu der genannten Röhre (20) zu verhindern, wenn sie in der genannten Leitung (40) verstaut ist, wobei der Tank **dadurch gekennzeichnet ist, dass** die obere Wand der genannten Vorrichtung (1) durch die äußere Wand des Tanks gebildet wird.

13. Tank (30) gemäß Anspruch 12, **dadurch gekennzeichnet, dass** die genannte Leitung (40) auf einer Seite angeordnet ist.
